(19) Europäisches Patentamt / European Patent Office / Office européen des brevets

(11) **EP 2 416 188 A1**

(12) **EUROPEAN PATENT APPLICATION**
published in accordance with Art. 153(4) EPC

(43) Date of publication:
**08.02.2012 Bulletin 2012/06**

(21) Application number: **10758766.9**

(22) Date of filing: **31.03.2010**

(51) Int Cl.:
*G02B 5/30* (2006.01)     *B29D 11/00* (2006.01)
*G02C 7/12* (2006.01)

(86) International application number:
**PCT/JP2010/055794**

(87) International publication number:
**WO 2010/113995 (07.10.2010 Gazette 2010/40)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.03.2009 JP 2009084238**

(71) Applicant: **Hoya Corporation**
**Tokyo 161-8525 (JP)**

(72) Inventors:
• **YAJIMA Eiichi**
**Tokyo 161-8525 (JP)**
• **ASAI Osamu**
**Tokyo 161-8525 (JP)**

(74) Representative: **Adam, Holger**
**Kraus & Weisert**
**Patent- und Rechtsanwälte**
**Thomas-Wimmer-Ring 15**
**80539 München (DE)**

(54) **METHOD FOR MANUFACTURING POLARIZED LENS AND POLARIZED LENS**

(57)     The present invention relates to a method of manufacturing a polarizing lens comprising: polishing in a constant direction one of surfaces of a first mold for forming one of surfaces of a lens; forming a polarizing film by coating a coating liquid containing a dichroic dye on the surface that has been polished; disposing a second mold, for forming the other surface of the lens, opposite the first mold with a prescribed gap therebetween, and forming a cavity by occluding the gap, wherein the two molds are disposed so that the polarizing film is positioned within the cavity; and casting a lens starting material liquid containing a curable component into the cavity and conducting a reaction to cure the curable component within the cavity to obtain a polarizing lens having the polarizing film on a lens substrate.

Fig. 1

Working surface 102
Nonworking surface 101
Polarizing film
Cavity 13
First mold 10
Working surface 112
Nonworking surface 111
Lens casting mold 1
Second mold 11
Gasket 12

EP 2 416 188 A1

**Description**

CROSS-REFERENCE TO RELATED APPLICATIONS

This application claims the benefit of priority to Japanese Patent Application No. 2009-084238 filed on March 31, 2009, which is expressly incorporated herein by reference in its entirety.

TECHNICAL FIELD

The present invention relates to a method of manufacturing a polarizing lens and to a polarizing lens. More particularly, the present invention relates to a method of manufacturing a polarizing lens that can be caused to exhibit a polarizing property of dichroic dye by an expedient means, and to a polarizing lens.

BACKGROUND OF THE ART

Polarizing lenses are used as anti-glare glasses in specific industries such as the welding and medical treatments, as well as in various sports such as skiing. Generally, the polarizing property of a dichroic dye is used to combat glare.

A dichroic dye is caused to exhibit a polarizing property primarily by uniaxially orienting the dichroic dye. The uniaxial orientation of a dichroic dye is commonly achieved by applying a coating liquid containing the dichroic dye on an orienting film. For example, WO 06/081006A1, which is expressly incorporated herein by reference in its entirety, discloses obtaining a polarizing lens by coating a dye solution on an intermediate inorganic layer such as vapor deposited layer of silica ($SiO_2$) or the like after brushing the surface of the intermediate inorganic layer.

The method of manufacturing a polarizing lens by polymerization curing a lens starting material liquid within the cavity of a casting mold after disposing a polarizing film within the cavity in the course of manufacturing a lens by cast polymerization is also known (for example, see Japanese Unexamined Patent Publication (KOKAI) No. 2001-311804, which is expressly incorporated herein by reference in its entirety).

SUMMARY OF THE INVENTION

However, orienting films comprised of inorganic materials such as those described in WO 06/081006A1 have high hardness. Thus, it is necessary to employ abrasive particles of relatively large diameter to polish the surface that is required to orient the dichroic dye. When excessive polishing is conducted, large polishing traces are generated that sometimes cause clouding of the vapor-deposited film. There are also problems in that vacuum vapor deposition is required to form a layer of an inorganic material, complicating the process and raising the cost of manufacturing a polarizing lens. There is also a problem in that with just a layer of an inorganic material, there is a large difference in the coefficient of thermal expansion with the substrate, producing cracks due to the difference in thermal expansion during heat treatment in the manufacturing process and finally resulting in clouding of the lens.

In the method described in Japanese Unexamined Patent Publication (KOKAI) No. 2001-311804, it is necessary to separately manufacture or prepare a polarizing film prior to cast polymerization. Thus, the polarizing film must be separately stored as inventory, which is disadvantageous in terms of cost.

Accordingly, it is an object of the present invention to provide a means of expediently manufacturing a polarizing lens having good optical characteristics in which clouding is reduced or prevented.

The present inventors conducted extensive research into achieving the above object, resulting in the following discoveries:

(1) By imparting the function of an orienting film to the surface of the mold employed in cast polymerization and coating a solution containing a dichroic dye on the surface of the mold, it was possible to form a polarizing film on the surface of the mold. By conducting cast molding to polymerize the lens substrate with this mold surface disposed within the cavity of the casting mold, it was possible to manufacture a polarizing lens in which the polarizing film on the surface of the mold was transferred onto the lens substrate.

(2) In the above method, since the mold was not a constituent element of the polarizing lens that was the final product, the optical characteristics of the polarizing lens were not affected even when clouding of the mold occurred because of polishing to impart the function of an orienting film. Accordingly, it became possible to obtain a polarizing lens in which clouding was reduced or prevented.

(3) Furthermore, the above method made it possible to conduct processing of the mold surface, forming of the polarizing film, and lens polymerization in a series of steps, thereby obviating the need to separately manufacture or prepare the polarizing film. This was expedient and highly advantageous in terms of cost.

The present invention was devised on the basis of these discoveries.

An aspect of the present invention relates to:

a method of manufacturing a polarizing lens comprising:
polishing in a constant direction one of surfaces of a first mold for forming one of surfaces of a lens;
forming a polarizing film by coating a coating liquid containing a dichroic dye on the surface that has been polished;
disposing a second mold, for forming the other surface of the lens, opposite the first mold with a prescribed gap therebetween, and forming a cavity by occluding the gap, wherein the two molds are disposed so that the polarizing film is positioned within the cavity; and
casting a lens starting material liquid containing a curable component into the cavity and conducting a reaction to cure the curable component within the cavity to obtain a polarizing lens having the polarizing film on a lens substrate.

Prior to forming the cavity, the dichroic dye in the polarizing film can be processed to render it water insoluble.

Prior to forming the cavity, the dichroic dye can be processed to immobilize it in the polarizing film.

At least one functional film can be formed on the polarizing film of the polarizing lens. The functional film can be at least one selected from the group consisting of a primer, a hardcoat, and an antireflective film.

The mold can be non-transparent.

Another aspect of the present invention relates to a polarizing lens comprising a polarizing film containing a dichroic dye on a lens substrate, wherein the polarizing film has continuous convex protrusions in a constant direction on an opposite surface from the lens substrate side.

The present invention permits the expedient manufacturing of high-quality polarizing lenses.

BRIEF DESCRIPTION OF THE DRAWINGS

[Fig. 1] Fig. 1 shows a schematic drawing of a lens casting mold that can be employed in the present invention.
[Fig. 2] Fig. 2 is a schematic descriptive drawing of the manufacturing steps of Example 1.
[Fig. 3] Fig. 3 is a schematic descriptive drawing of the manufacturing steps of Example 2.
[Fig. 4] Fig. 4 is a schematic descriptive drawing of the manufacturing steps of Example 3.
[Fig. 5] Fig. 5 is a schematic sectional view of an example of the polarizing lens of the present invention.

MODE FOR CARRYING OUT THE INVENTION

The method of manufacturing a polarizing lens of the present invention comprises the following steps:

(1) polishing in a constant direction one of surfaces of a first mold for forming one of surfaces of a lens (referred to as the "polishing step", hereinafter);
(2) forming a polarizing film by coating a coating liquid containing a dichroic dye (also referred to as a "dye-containing coating liquid" or "coating liquid", hereinafter) on the surface that has been polished (referred to as the "polarizing film-forming step", hereinafter);
(3) disposing a second mold, for forming the other surface of the lens, opposite the first mold with a prescribed gap therebetween, and forming a cavity by occluding the gap, wherein the two molds are disposed so that the polarizing film is positioned within the cavity (referred to as the "casting mold assembly step", hereinafter); and
(4) casting a lens starting material liquid containing a curable component into the cavity and conducting a reaction to cure the curable component within the cavity to obtain a polarizing lens having the polarizing film on a lens substrate (referred to as the "curing step", hereinafter).

The above steps will be sequentially described in detail below.

(1) Polishing step

In cast polymerization, a reaction to cure a lens starting material liquid is conducted in the cavity of a casting mold to manufacture a lens-shaped molded article (lens substrate). The cavity is formed by disposing two molds opposite each other and then occluding the gap between the molds. In this step, the surface of the mold that will be disposed within the cavity in the casting mold assembly step described below is polished in a constant direction. In the polarizing film-forming step, a dye-containing coating liquid is coated on the mold surface that has been polished to cause the dichroic dye to exhibit a polarizing property.

The mold that is polished can be either one of the two molds constituting the casting mold; this determination can be made based on whether the polarizing film is being disposed on the object side or on the eyeball side of the polarizing lens obtained. A convex mold having a molding surface on the convex side that is to form the concave surface of the lens (eyeball side during use) and a concave mold having a molding surface on the concave side that is to form the convex surface of the lens (object side during use) are employed to form a meniscus-shaped lens by cast polymerization. Polishing the concave surface and coating it with a coating liquid are desirable because stable holding is possible without the coating liquid flowing down from the surface of the mold. However, it is also naturally possible to polish the convex surface and apply the coating liquid to it. In that case, it is desirable to adjust the viscosity and coating quantity of the coating liquid so that the coating liquid is stably retained on the convex surface.

The mold surface that is processed is polished in a constant direction. In this context, the term "a constant direction" means parallel, for example. However, it suffices for the polishing traces to be formed in striated fashion and for the polishing direction to be aligned to such a degree that the polishing traces do not intersect each other; completely parallel polishing is unnecessary. This state will be referred to as "approximately parallel" hereinafter.

The mold surface can be polished by the various polishing processes commonly employed in orientation processing when manufacturing polarizing films and liquid crystal molecules. For example, the polishing can be conducted by the rubbing process employed to orient liquid crystal molecules. In the rubbing process, the surface being polished is rubbed in a constant direction with cloth or the like. Reference can be made to U.S. Patent No. 2,400,877, U.S. Patent No. 4,865,668, or the like for the details. The contents of the above patents are expressly incorporated herein by reference in their entirety.

An abrasive can also be employed for polishing. The abrasive that is employed for polishing is not specifically limited. For example, an abrasive obtained by immersing a foam material such as polyurethane foam in a slurry containing abrasive particles can be employed. For example, the surface of the mold can be polished in a constant direction by rotating urethane foam on the surface of the mold. Examples of abrasive particles are $SiO_2$ $Al_2O_3$, $ZrO_2$, $TiO_2$, and $CeO_2$. Of these, from the perspectives of the hardness (ease of polishing and finish) relative to commonly employed glass molds and chemical stability, $Al_2O_3$ is desirable. These can be employed singly or in combinations of two or more. Viscosity-modifying agents, pH-adjusting agents, and the like can be incorporated into the slurry containing the abrasive particles. From the perspective of enhancing the polarizing property of the dichroic dye, the average particle diameter of the abrasive particles is desirably less than 100 $\mu$m, preferably 0.5 to 50 $\mu$m, and more preferably, 1 to 10 $\mu$m. The polishing conditions are not specifically limited. The rotational speed, polishing pressure, polishing time, and the like can be suitably adjusted. The depth and pitch of the polishing traces that are formed can be set to permit uniaxial orientation of the dichroic dye.

Following polishing, the mold can be washed and dried by known methods as needed. The polarizing film-forming step set forth below is then conducted.

(2) Polarizing film-forming step

In this step, a polarizing film is formed by coating a coating liquid containing a dichroic dye on the mold surface that has been polished. Coating the coating liquid on the mold surface that has been polished can cause the dichroic dye in the coating liquid to assume a uniaxial orientation. Thus, the dichroic dye can be caused to exhibit a polarizing property.

In the polarizing film that is formed by the above step, the coating liquid enters the grooves that are formed on the mold surface. Thus, there are continuous convex protrusions on the opposite surface from the lens substrate side, that is, on the object side, of the polarizing film in the polarizing lens that is finally obtained. Since the approximately parallel groove shape (polishing traces) that is formed on the mold surface that has been polished in a constant direction is transferred, these continuous protrusions have a specific directional property. As stated above, the depth and pitch of the polishing traces that are formed on the mold surface are set so as to impart a uniaxial orientation to the dichroic dye. Thus, the shape of the continuous protrusions that are formed is determined by the polishing conditions that are set. When considering groove shapes that cause common dichroic dyes to exhibit polarizing properties, the maximum height of the individual protrusions is about 1 to 2 nm, and the spacing of the protrusions (the spacing between adjacent protrusion peaks) is about 0.3 to 0.7 $\mu$m. Here, the shape of the protrusion is the sectional shape perpendicular to the direction in which the protrusion extends. Minute irregularities are sometimes present in the cross section along the direction in which the protrusions extend. The shape of these minute irregularities is determined by the surface properties of the mold. Normally, the height of convex portions of the irregularities is about equal to or less than 0.2 nm.

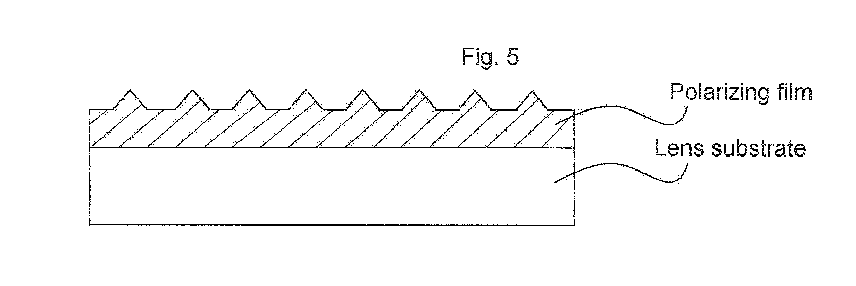

Fig. 5 shows an example of a polarizing lens having the polarizing film with above-described continuous protrusions.

By contrast, since a solution containing a dichroic dye is coated on a grooved lens substrate (orienting film) in the method of manufacturing a conventional polarizing lens such as that described in above-cited WO 06/081006A1, the polarizing film has continuous convex continuous protrusions protruding from the lens substrate side. That is, the present invention makes it possible to obtain a polarizing lens of novel configuration. In the polarizing lens of this configuration, the fine continuous convex protrusions on the polarizing film can exhibit a counter-anchoring effect, making it possible to obtain adequate adhesion with various upper layer functional films.

The term "dichroic" refers to the property whereby the color of transmitted light varies with the direction of propagation due to anisotropy of selective absorption of light by a medium. A dichroic dye has the property of strong absorption of polarized light in a specific orientation of the dye molecules and weak absorption in a direction orthogonal thereto. Some dichroic dyes are known to exhibit liquid crystal states at certain concentrations and in certain temperature ranges when water is employed as a solvent. Such liquid crystal states are called as lyotropic liquid crystals. Stronger dichroism can be achieved by using the liquid-crystal states of dichroic dyes to orient the dye molecules in a specific direction. In the present invention, the dichroic dye can be uniaxially oriented by applying the coating liquid on the surface that has been polished described above to exhibit a good polarizing property.

The dichroic dye employed in the present invention is not specifically limited. Various dichroic dyes that are commonly employed in polarizing elements can be employed. Specific examples are azo dyes, anthraquinone dyes, merocyanine dyes, styryl dyes, azomethine dyes, quinone dyes, quinophthalone dyes, perylene dyes, indigo dyes, tetrazine dyes, stilbene dyes, and benzidine dyes. The dyes described in U.S. Patent No. 2,400,877, Published Japanese Translation (TOKUHYO) No. 2002-527786 of a PCT International Application, which are expressly incorporated herein by reference in their entirety, and the like may also be employed.

The coating liquid containing a dichroic dye can be a solution or a suspension, and is desirably an aqueous solution or an aqueous suspension employing water as solvent. The content of dichroic dye in the coating liquid is, for example, about 1 to 50 mass percent, but is not limited to this range so long as the desired polarizing property is achieved.

The coating liquid can contain other components in addition to the dichroic dye. An example of another component is a dye other than a dichroic dye. Compounding such dyes makes it possible to manufacture a polarizing lens of desired color. From the perspective of further enhancing coating properties and the like, additives such as rheology-modifying agents, adhesion-enhancing agents, plasticizers, and leveling agents can be compounded.

The method of coating the coating liquid is not specifically limited. Examples are known methods such as spin coating, dip coating, flow coating, and spray coating. The thickness of the polarizing film that is formed is not specifically limited. By way of example, it can be about 0.05 to 5 $\mu$m. It suffices to determine the quantity of coating liquid that is applied based on the desired film thickness.

Since most dichroic dyes are water-soluble, it is desirable to increase the film stability by means of a treatment to impart insolubility in water after coating and drying the coating liquid. For example, the treatment to impart insolubility in water can consist of ion-exchanging the terminal hydroxyl group of the dye molecule or inducing a state of chelation between the dye and a metal salt. To that end, the method of immersing the polarizing film that has been formed in an aqueous solution of a metal salt is desirably employed. The metal salt employed is not specifically limited. Examples are: $AlCl_3$, $BaCl_2$, $CdCl_2$, $ZnCl_2$, $FeCl_2$, and $SnCl_3$. Of these, from the perspective of safety, $AlCl_3$ and $ZnCl_2$ are desirable. Following the treatment to impart insolubility in water, the surface of the polarizing film can be dried.

To increase film strength and stability, the polarizing film is also desirably treated to immobilize the dichroic dye preferably following the treatment to impart insolubility in water. For example, the immobilizing treatment can consist of coating a coupling agent solution on the polarizing film. A coupling agent solution can be coated on the polarizing film by a known technique such as dipping, spin coating, or spraying. The coupling agent solution can be applied once or two or more times as needed. Following the application, a heat treatment (annealing) can be conducted to cure the coupling agent. The annealing temperature can be determined based on the coupling agent employed.

Based on the above operation, the polarizing film is impregnated with the coupling agent, essentially causing the coupling agent to be incorporated into the polarizing film. In this case, the thickness of the polarizing film, although not specifically limited, is desirably 0.05 to 1 $\mu$m. By way of example, a coupling agent solution in the form of an aqueous solution comprising 1 to 50 mass percent of coupling agent can be employed. Known coupling agents such as silane coupling agents can be employed. Examples of silane coupling agents that are suitable for use are the following organic silicon compounds: glycidoxy group-containing trialkoxysilanes such as γ-glycidoxypropyltrimethoxysilane (γ-GPS) and γ-glycidoxypropylmethyldiethoxysilane; epoxyalkylalkoxysilanes such as β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl) ethyltributoxysilane, γ-(3,4-epoxycyclohexyl)propyltrimethoxysilanc, γ-(3,4-etpoxycyclohexyl)propyltriethoxysilane, δ-(3,4-epoxycyclohexyl)butyltrimethoxysilane, and δ-(3,4-epoxycyclohexyl)butyltriethoxysilane; and amino group-containing alkoxy silanes such as N-(β-aminoethyl)- γ-aminopropyltrimethoxysilane, N-(β-aminoethyl)-γ-aminopropylmethyldimethoxysilane, γ-aminopropylmethyldimethoxysilane, γ-aminopropylmethyldiethoxysilane, γ-aminopropyltrimethoxysilane, γ-aminopropyltriethoxysilane, N-(β-aminoethyl)- γ-aminopropylmethyldimethoxysilane, and N-(β-aminocthyl)- γ-aminopropylmethyldiethoxysilane. However, the coupling agent is not limited thereto. These compounds may be employed singly, or in combinations of two or more.

To increase adhesion between the polarizing film and the lens substrate, a primer can be formed on the polarizing film prior to the casting mold assembly step. Any known adhesive layer can be employed without limitation as the primer. Specific examples are coating films formed by coating solutions of polyurethane resin, vinyl acetate, olefin-based resin in the form of ethylene-vinyl copolymer, acrylic-based resin, epoxy-based resin, and urethane-based resin. It suffices to suitably determine the film thickness of the primer.

(3) Castling mold assembly step

Following the formation of the polarizing film on the mold surface by the above step, a cavity is formed by disposing a second mold, for forming the other surface of the lens, opposite the first mold with a prescribed gap therebetween, and occluding the gap. The two molds are disposed so that the polarizing film is positioned within the cavity, thereby making it possible to transfer the polarizing film onto the lens substrate by cast polymerization.

The gap between the two molds can be occluded with a cylindrical gasket. Instead of a gasket, adhesive tape can be wound on the lateral surfaces of the two molds to occlude the gap. The molds and gaskets that are employed in ordinary cast polymerization can be employed as is. Glass molds, desirably ones that have been subjected to a chemical strengthening treatment to render them resistant to damage and scratching, can be employed as the molds. The optical characteristics of the lens are affected when the working surface of the mold on which irregularities are formed by polishing serve without modification as transfer surfaces to transfer the optical surfaces of the lens. However, a polarizing film is formed on the working surface of the mold in the present invention. Thus, due to the masking effects of the polarizing film, the above-described primer, and the like, the mold transfer surfaces (such as the outermost surface of the polarizing film or the outermost surface of the above primer) can be rendered smooth. In this fashion, it is possible to avoid having the irregularities caused by the polishing of working surface of the mold affect the optical characteristics of the lens. Since the molds are not themselves constituent elements of the polarizing lens that is the final product, it does not matter if clouding of the molds occurs as a result of the polishing. Nor does it matter if irregularities such as scratches and ground glass are present on nonworking surfaces of the molds. That is, the molds can be transparent or non-transparent. It is also possible to employ non-transparent molds such as metal molds. Metal molds are advantageous from the perspective of processability because they can be molded into a desired shape by injection molding. In the present invention, the term "transparent" means a transmittance of equal to or more than 80 percent of visible light (wavelengths 380 to 780 nm), and "non-transparent" means a transmittance of visible light of less than 80 percent.

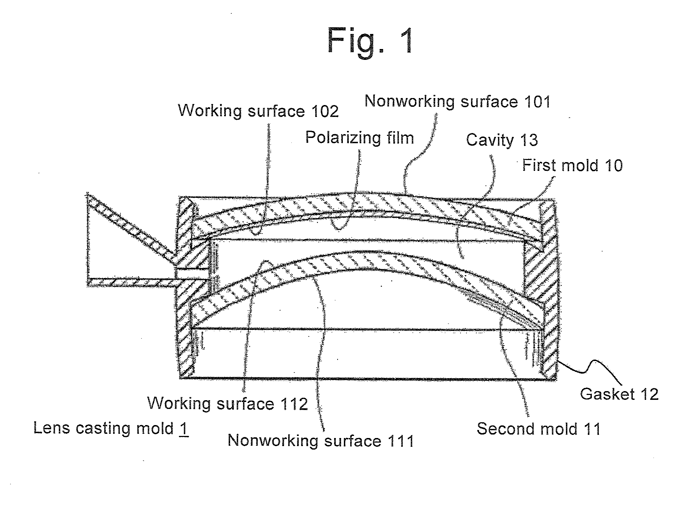

Fig. 1 shows a schematic drawing of a lens casting mold comprised of a first mold, a second mold, and a gasket disposed as set forth above. The casting mold assembly step will be described below based on Fig. 1. However, the present invention is not limited to the form shown in Fig. 1.

In Fig. 1, a cavity 13 is formed within lens casting mold 1 by a first mold 10 in the form of a concave mold having a molding surface on the concave side thereof for molding the front surface (convex surface) of a lens, a second mold 11 having a molding surface on the convex side thereof for molding the rear surface (concave surface) of a lens, and a gasket 12. Gasket 12 functions as the outer perimeter holder of the gasket, determining the thickness of the lens. The thickness of the lens substrate is, for example, about 1 to 30 mm. However, it is not limited to this range.

The first and second molds have non-transfer surfaces (nonworking surfaces 101, 111) that can be handled by the manufacturing jig and transfer surfaces for transferring optical surfaces to the lens (working surfaces 102, 112). Working surfaces 102 and 112 are surfaces that transfer the optical surface shape and surface state of the lens. A polarizing film is formed in the polarizing film-forming step on working surface 102. The polarizing film is transferred to the lens substrate by casting the lens starting material liquid into, and curing it within, the cavity.

(4) Curing steps

In this step, the lens starting material liquid containing the curable component is cast into the cavity formed in the casting mold assembly step and a reaction is conducted within the cavity to cure the curable component. It is thus possible to obtain a polarizing lens having a polarizing film on a lens substrate.

The lens starting material liquid that is cast into the cavity contains a curable component. It can contain the starting material monomers, oligomers, and/or prepolymers of the various polymers constituting a common plastic lens substrate, desirably a plastic lens substrate for an eyeglass lens. It can also contain a mixture of two or more monomers to form a copolymer. The curable component can be either a thermosetting component or a photocurable component. In cast polymerization, a thermosetting component is normally employed. As needed, catalysts selected based on the monomer can be added to the lens starting material liquid. The various additives that are commonly employed can also be incorporated into the lens starting material liquid.

Specific examples of the lens starting material liquid are: those capable of polymerizing copolymers of methyl methacrylate and one or more other monomers, copolymers of diethylene glycol bisallyl carbonate and one or more other monomers, copolymers of polyurethane and polyurea, polycarbonate, polystyrene, polyvinyl chloride, unsaturated polyester, polyethylene terephthalate, polyurethane, polythiourethane, sulfide resins utilizing ene-thiol reactions, sulfur-containing vinyl polymers, and the like. Of these, urethane-based compounds are suitable as curable components. However, there is no limitation on such compounds. The lens starting material liquid can be cast into the cavity in the same manner as in ordinary cast polymerization.

The lens starting material liquid that has been cast into the cavity is then heated, irradiated with light, or the like to cause the curable component contained in the lens starting material liquid to undergo a curing reaction and produce a molded article in the form of a lens. The curing reaction conditions (such as the temperature increase program during heating) are not specifically limited, and can be determined based on the lens starting material liquid employed. Upon completion of the curing treatment, the two molds that are tightly adhered to the lens are separated (mold separation) to obtain a polarizing lens having a polarizing film on a lens substrate.

As needed, various functional films can be laminated by known film-forming methods on the polarizing lens obtained following mold separation. As set forth above, there are continuous convex protrusions on the polarizing film on the polarizing lens. Due to a counter-anchoring effect, adequate adhesion can be achieved with upper layer functional films. Examples of functional films that can be formed are a hardcoat film and an antireflective film. For example, a hardcoat film can be 0.5 to 10 $\mu$m in thickness, and an antireflective film is 0.1 to 5 $\mu$m in thickness.

Coating compositions comprising known organic silicon compounds and inorganic oxide colloidal particles can be employed as materials of the hardcoat film with a curing treatment such as thermosetting as needed. Examples are the organic silicon compounds and inorganic oxide colloidal particles described in paragraphs [0071] to [0074] of Japanese Unexamined Patent Publication (KOKAI) No. 2007-77327, which is expressly incorporated herein by reference in its entirety. However, there is no limitation thereto. Known UV-curable resins such as acrylate monomers and oligomers, as well as EB-curable resins, can be employed as coating compositions. Hardcoat layer coating compositions can be prepared by conventionally known methods.

The method of coating the above coating composition on a substrate is an example of the method of forming a hardcoat layer on a substrate. A commonly employed method such as dipping, spin coating, or spraying can be applied as the coating technique. From the perspective of surface precision, dipping and spin coating are preferred.

A single-layer film or a multi-layer film comprising a known inorganic oxide can be employed as an antireflective film. Examples of the inorganic oxide are silicon dioxide ($SiO_2$), zirconium oxide ($ZrO_2$), aluminum oxide ($Al_2O_3$), niobium oxide ($Nb_2O_5$), and yttrium oxide ($Y_2O_3$). The method of formation is not specifically limited.

Functional films in the form of water-repellent films, ultraviolet-absorbing films, infrared-absorbing films, photochromic films, antistatic films, and the like can also be laminated. A further example is a primer to enhance adhesion between these films and the lens. Details regarding the primer are as set forth above. These functional films can be laminated over the polarizing film, or can be laminated on the opposite surface of the lens substrate from the polarizing film.

A polarizing lens having both a good polarizing property and good optical characteristics can be expediently obtained by the above steps. The polarizing lens that is obtained is suitable as a variety of lenses. In particular, it is suitable as an eyeglass lens because it can have good optical characteristics. In the case of an eyeglass lens, the refractive index is, for example, about 1.50 to 1.80 and the Abbé number is, for example, equal to or higher than 3 0.

The present invention further relates to a polarizing lens comprising a polarizing film containing a dichroic dye on a lens substrate, wherein the polarizing film has continuous convex protrusions in a constant direction on an opposite surface from the lens substrate side. As set forth above, the polarizing lens of the above configuration cannot be obtained by conventional manufacturing methods. In the polarizing lens of the present invention, the continuous protrusions are disposed in striated fashion; it suffices for the protrusions to be aligned to a degree such that they do not to intersect each other, and they need not be perfectly parallel. As stated above, the convex, fine, continuous protrusions on the surface of the polarizing film can serve as counter-anchors, making it possible to achieve adequate adhesion with upper layer functional films.

EXAMPLES

The present invention is further described below through Examples. However, the present invention is not limited to the embodiments shown in the Examples.

[Example 1]

1. Polishing of the mold surface

Two glass molds that had been cleaned were prepared as a concave mold (first mold) and convex mold (second mold) to form a meniscus lens. A uniaxial polishing treatment was conducted for 30 seconds under conditions of a rotating speed of 350 rpm and a polishing pressure of 50 g/cm$^2$ using an abrasive-containing urethane foam (abrasive: "FM No. 1" made by Fujimi Inc., $Al_2O_3$ particles with an average particle diameter of 2.5 $\mu$m; urethane foam: shaped to about the same curvature as the concave surface) on the concave surface (working surface) of the first mold. The polished mold was washed with pure water and dried.

II. Forming the polarizing film, rendering the dichroic dye insoluble in water, and immobilizing the dichroic dye

A 2 to 3 g quantity of an approximately 5 mass percent aqueous solution of dichroic dye ("Varilight Solution 2S," a product made by Sterling Optics, Inc.) was spin coated to form a polarizing film on the concave mold surface (polished surface) following I. above. The spin coating was conducted by feeding the aqueous solution of dye at a rotating speed of 200 rpm for 10 seconds, 300 rpm for 40 seconds, and 1,000 rpm for 20 seconds.

Next, a pH 3.5 aqueous solution was prepared with an iron chloride concentration of 0.15 M and a calcium hydroxide concentration of 0.2 M. The mold obtained as set forth above was immersed for 30 seconds in this aqueous solution, withdrawn, and thoroughly cleaned with pure water. In this step, the water-soluble dye was rendered highly water insoluble (water insolubilizing treatment).

Subsequently, the mold was immersed for 15 minutes in a 10 mass percent aqueous solution of γ-aminopropyltriethoxysilane, rinsed three times with pure water, and heat cured for 30 minutes at 60˚C. The organic silicon compound was introduced into the polarizing film by means of this operation, thereby immobilizing the dichroic dye within the film.

III. Curing the lens substrate and transferring the polarizing film

The polarizing film was transferred to the lens substrate by the following steps using the mold on which the polarizing film had been formed in II. above:

(1) The first mold on which the polarizing film had been formed was pressed into a cylindrical gasket in such a manner as to become the convex side of the lens, and the second mold, on which no polarizing film had been formed, was pressed in with a prescribed amount so as to become the concave surface side of the lens to achieve a configuration forming a cavity.

(2) Next, a lens starting material containing a thermosetting urethane-based monomer was cast into the cavity formed in (1) above, and heat polymerization was conducted according to a prescribed polymerization program to cure the monomer.

(3) The polymerization ended and the molds were separated from the lens. At that time, the polarizing film on the first mold was transferred to the lens substrate.

(4) The perimeter portion of the lens onto which the polarizing film had been transferred was trimmed away, the lens was cleaned, and annealing was conducted according to a prescribed program.

A meniscus polarizing lens having a polarizing film on the convex surface thereof was obtained by the above steps. Observation of the surface of the polarizing film by an atomic force microscope (AFM) revealed that the maximum height of the continuous protrusions formed in a constant direction was about 1.5 nm, the protrusion spacing was about 0.5 μm, and the height of the convex portions in the direction of the continuous protrusions was equal to or less than 0.2 nm.

IV. Forming a primer

Four mass parts of UV-curable resin ("Adeka Bontiter HUX," a product made by ADEKA Corporation) were diluted in 100 mass parts of propylene glycol monomethyl ether (PGM). The solution obtained was filtered with a 0.5 μm filter to obtain a coating composition. The coating composition was coated by spin coating (1,000 rpm for 30 seconds) onto both surfaces of the polarizing lens obtained in III. above. Following coating, curing was conducted under conditions of 60˚C for 30 minutes to form a primer film.

V. Forming a hardcoat film

A hardcoat was formed by the following method on the primer formed in IV. above. Hardcoats were formed on both surfaces of the polarizing lens.

Ten mass parts of Kayarad DPCA-20 made by Nippon Kayaku Co., Ltd. were diluted in 30 mass parts of ethyl acetate, two mass parts of a photoinitiator (IRUGACURE 184 made by Ciba Specialty Chemicals) were added, and the mixture was applied by spin coating (1,500 rpm for 30 seconds). Curing was conducted with a UV-radiating device at a UV irradiation level of 600 mJ/cm$^2$ to form a hardcoat film.

[Example 2]

With the exception that primer was formed by the same method as in IV. in Example 1 on the surface of the polarizing film after the immobilization treatment, a polarizing lens was prepared by the same method as in Example 1.

[Example 3]

With the exceptions that primer was formed by the same method as in IV. in Example 1 on the surface of the polarizing film after the immobilization treatment and a hardcoat film was formed by the same method as in V. in Example 1 on the primer thus formed, a polarizing lens was prepared by the same method as in Example 1.

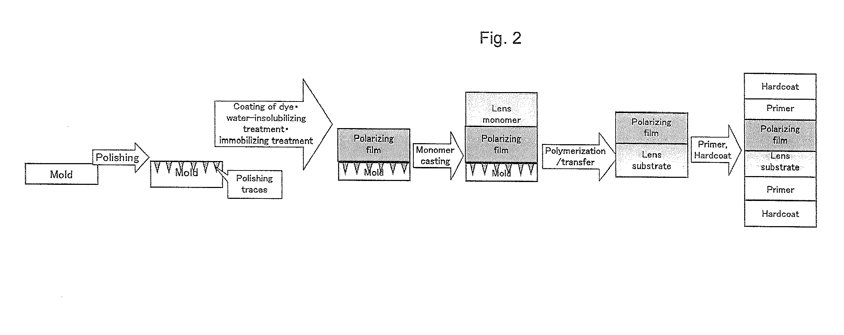

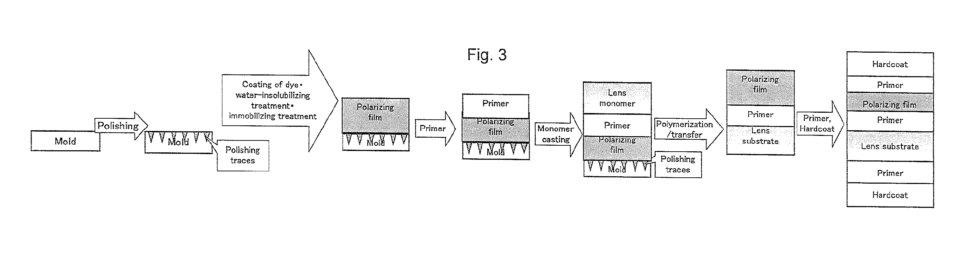

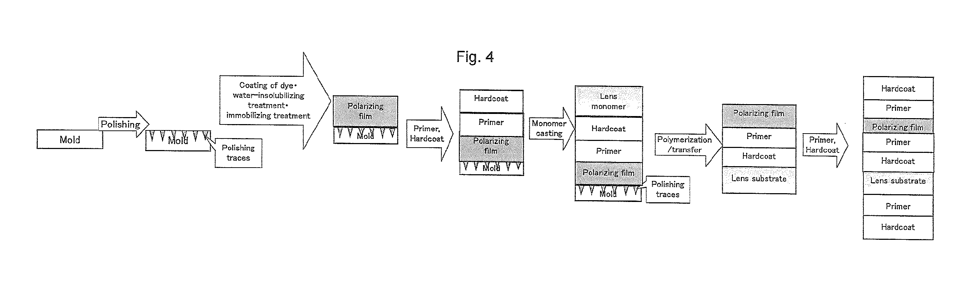

Figs. 2 to 4 are schematic descriptive drawings of the manufacturing steps in Examples 1 to 3. The methods used to evaluate the polarizing lenses obtained are given below.

(1) Polarizing efficiency

Polarizing efficiency ($P_{eff}$) was evaluated in accordance with ISO8980 by calculation from the following equation after obtaining the parallel transmittance ($T_{//}$) and the perpendicular transmittance ($T\perp$). The parallel transmittance and perpendicular transmittance were measured using a visible spectrophotometer and a polarizer. A polarizing efficiency of equal to or higher than 60 percent was determined to constitute a polarizing property adequate for practical use.

$$P_{eff}(\%) = [(T_{//} - T\perp)/(T_{//}+T\perp)] \times 100$$

(2) Transparency (haze value)

The haze value of the polarizing lenses that were fabricated was measured with a haze meter MH-150 made by Murakami Color Research Laboratory, and the absence or presence of clouding was determined.

(Evaluation criteria)

O: No clouding (haze value ≤ 1.0 percent)
X: Clouding present (haze value > 1.0 percent)

(3) Adhesion

The adhesion of the lens substrate and polarizing film in the polarizing lenses fabricated was evaluated by a standard adhesive tape test under the measurement conditions indicated below using polarizing lenses that had been soaked for about 24 hours in 50˚C water.

(Measurement conditions)

The lens surface on the polarizing film side was crosscut into a grid of 100 squares each measuring 1.5 mm on a side. Adhesive tape (cellophane tape, made by Nichiban K.K.) was strongly applied over the crosscuts. The adhesive tape was then rapidly peeled off and the number of squares that separated from among the 100 squares was determined. When the number of squares that separated was 1 or 2/100, the adhesion was determined to be "O".

The evaluation results are given in Table 1 below.

[Table 1]

|  | Example 1 | Example 2 | Example 3 |
|---|---|---|---|
| Polarizing efficiency (%) | 98. 5 | 98. 6 | 98. 7 |
| Transparency | ○ | ○ | ○ |
| Adhesion (number of squares separated) | 0 (No separation) | 0 (No separation) | 0 (No separation) |

[Example 4]

A polarizing lens obtained by the same method as in Example 1 was placed in a vapor deposition apparatus and heated to 85°C while evacuating the apparatus. Once the apparatus had been evacuated to 2.7 mPa (2 x 10$^{-5}$ torr), a vapor deposition starting material was vaporized by heating with an electron beam to form: a base layer of $SiO_2$ with a thickness of 0.6 λ; a first refractive layer comprised of a mixed layer (nd = 2.05, nλ= 0.075 λ) of $Ta_2O_5$, $ZrO_2$, and $Y_2O_3$ and an $SiO_2$layer (nd = 1.46, nλ= 0.056 λ) over the base layer; and a second low-refractive-index layer (nd = 1.46, nλ= 0.25 λ) comprised of a mixed layer (nd=2.05, nλ= 0.075 λ) of $Ta_2O_5$, $ZrO_2$, and $Y_2O_3$ and an $SiO_2$ layer to produce an antireflective film. The lens obtained was evaluated in the same manner as above, revealing a polarizing efficiency of equal to or greater than 90 percent and a transparency evaluation result of "O".

[Example 5]

With the exception that a non-transparent glass mold the nonworking surface of which has irregularities such as those of ground glass was employed in I. in Example 1, a polarizing lens was fabricated by the same method as in Example 1.
The lens obtained was evaluated in the same manner as above, revealing a polarizing efficiency of 99.0 percent and transparency and adhesion evaluation results of "O".
The above results indicate that polarizing lenses having both good polarizing properties and good optical characteristics (transparency) were obtained based on the present invention. In Examples 1 to 3 and 5, evaluation of adhesion between the lens substrate and the polarizing film yielded good results, confirming that polarizing lenses produced by the manufacturing method of the present invention afforded good durability.
The polarizing lens obtained by the present invention is suitable as an eyeglass lens.

**Claims**

1. A method of manufacturing a polarizing lens comprising:

   polishing in a constant direction one of surfaces of a first mold for forming one of surfaces of a lens;
   forming a polarizing film by coating a coating liquid containing a dichroic dye on the surface that has been polished;
   disposing a second mold, for forming the other surface of the lens, opposite the first mold with a prescribed gap therebetween, and forming a cavity by occluding the gap, wherein the two molds are disposed so that the polarizing film is positioned within the cavity; and
   casting a lens starting material liquid containing a curable component into the cavity and conducting a reaction to cure the curable component within the cavity to obtain a polarizing lens having the polarizing film on a lens substrate.

2. The method of manufacturing a polarizing lens according to claim 1, which comprises, prior to forming the cavity, conducting a process of rendering the dichroic dye in the polarizing film water insoluble.

3. The method of manufacturing a polarizing lens according to claim 1 or 2, which comprises, prior to forming the cavity, conducting a process of immobilizing the dichroic dye in the polarizing film.

4. The method of manufacturing a polarizing lens according to any of claims 1 to 3, which comprises forming at least one functional film on the polarizing film of the polarizing lens.

5. The method of manufacturing a polarizing lens according to claim 4, wherein the functional film is at least one selected from the group consisting of a primer, a hardcoat, and an antireflective film.

6. The method of manufacturing a polarizing lens according to any of claims 1. to 5, wherein the mold is non-transparent.

7. A polarizing lens comprising a polarizing film containing a dichroic dye on a lens substrate, wherein the polarizing film has continuous convex protrusions in a constant direction on an opposite surface from the lens substrate side.

# Fig. 1

EP 2 416 188 A1

Fig. 2

Fig. 3

Fig. 4

EP 2 416 188 A1

Fig. 5

Polarizing film

Lens substrate

**EP 2 416 188 A1**

<table>
<tr><td colspan="2"><b>INTERNATIONAL SEARCH REPORT</b></td><td>International application No.<br>PCT/JP2010/055794</td></tr>
</table>

A.  CLASSIFICATION OF SUBJECT MATTER
*G02B5/30*(2006.01)i, *B29D11/00*(2006.01)i, *G02C7/12*(2006.01)i

According to International Patent Classification (IPC) or to both national classification and IPC

B.  FIELDS SEARCHED

Minimum documentation searched (classification system followed by classification symbols)
G02B5/30, B29D11/00, G02C7/12

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2001-311804 A  (Talex Optical Co., Ltd.),<br>09 November 2001 (09.11.2001),<br>paragraphs [0019] to [0029]<br>(Family: none) | 7<br>1-6 |
| Y<br>A | JP 54-27457 A  (Shinshu Seiki Kabushiki Kaisha),<br>01 March 1979 (01.03.1979),<br>page 2, lower right column, line 1 to lower left column, line 15<br>(Family: none) | 7<br>1-6 |

☐  Further documents are listed in the continuation of Box C.        ☐  See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>23 April, 2010 (23.04.10) | Date of mailing of the international search report<br>11 May, 2010 (11.05.10) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009084238 A
- WO 06081006 A1
- JP 2001311804 A
- US 2400877 A
- US 4865668 A
- JP 2002527786 A
- JP 2007077327 A